# EUROPEAN PATENT SPECIFICATION

(11) **EP 1 872 994 B1**
(45) Date of publication and mention of the grant of the patent: **14.04.2010**
(21) Application number: 07011968.0
(22) Date of filing: 19.06.2007
(51) Int. Cl.: B60J 10/10

(54) **Connecting structure of drain hose**
Verbindungsstruktur eines Abflussschlauchs
Structrure de connexion pour tuyau souple de drainage

(30) Priority: 19.06.2006 JP 2006168276
(43) Date of publication of application: 02.01.2008
(73) Proprietor: Webasto AG, 82131 Stockdorf (DE); Nishikawa Rubber Co., Ltd., Hiroshima-shi, Hiroshima-ken (JP)
(72) Inventor: Yamada, Akio, Higashihiroshima-City 739-0038 (JP); Takeshita, Hiroshi, Higashihiroshima-City 739-0038 (JP); Tsuchida, Eiji, Hiroshima 733-8510 (JP); Nishikawa, Shinji, Hiroshima 733-8510 (JP); Matsunobu, Tomoaki, Hiroshima (JP); Nishiyama, Nobuyoshi, Hiroshima (JP); Kinoshita, Naotoshi, Hiroshima (JP); Tanoue , Hiroki, Hiroshima (JP)
(74) Representative: Thoma, Michael

(56) References cited:
- DE-U1-202006 002 765
- GB-A- 430 479
- JP-A- 7 089 354
- JP-A- 2003 054 265
- US-A1- 2006 125 292

## Description

### Technical Field.

This invention relates to a vehicle comprising connection structure for a drainage hose that connects to weatherstripping provided on a movable roof member.

### Technical Background.

There are known retractable roofs of prior art that have a movable roof member that can open and close the vehicle passenger compartment (see Patent Reference #1 and #2 according to the preamble of claims 1 and 4).

Such a roof member is composed of multiple roof component members, and the roof member in Patent Reference #1 is composed of a front roof panel that covers the top of the vehicle passenger compartment, a rear window that covers the rear of the vehicle passenger compartment, and a middle roof panel that is between the rear window and the front roof panel, Weatherstripping is placed between the roof component members, and between each roof component member and the body, to form a tight seal within the vehicle passenger compartment when the roof member is in the closed configuration, providing protection from wind and rain.

In more detail, in the retractable roof of Patent Reference #1, middle weatherstripping extends as a seal along the lower edge of the middle roof panel between the middle roof panel and the body or deck panel, and rear weatherstripping extends as a seal along the lower edge of the rear window between the rear window and the body or deck panel. Also, the weatherstripping contains two nearly parallel seal portions along its extent, and a drainage channel that is formed between the two seal portions. A drainage hole is formed in the drainage channel of the middle weatherstripping, and the upstream end of a drainage hose is connected to this drainage hole. The drainage hose is laid out on the vehicle passenger compartment side of the roof member, and its downstream end is connected to a vehicle side drain.

When the roof member is in the closed configuration, the middle and rear weatherstripping that are formed in this way connect to each other to form continuous weatherstripping, and their drainage channels are continuous. Therefore, the middle and rear weatherstripping are formed so that, when the roof member is in the closed configuration, they seal the lower edge of the middle roof panel and the lower edge of the rear window against the body and deck panel, guiding water that enters the weatherstripping along the drainage channel to the drainage hole, and draining it through the drainage hose.
Patent Reference #1. Laid-open publication number JP-2003-054265 A. Patent Reference #2. Laid open publication number US 2006/125292 A1..

### Invention Disclosure.

### Problems That the Invention Tries to Solve.

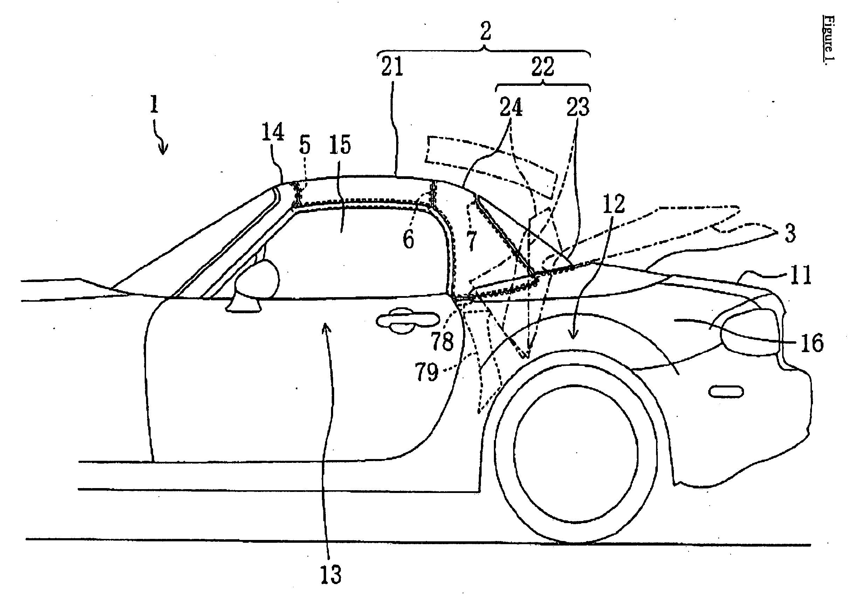

However, although details are omitted here, the upstream end of the drainage hose of Patent Reference #1 is connected to the weatherstripping of the middle roof panel (see Figure 1 of Patent Reference #1). Therefore, when the middle roof panel opens and closes, the drainage hose bends and moves in order to follow along with the opening and closing of the middle roof panel. In this way, with a structure in which the drainage hose follows along with the opening and closing of the middle roof panel, the portion of the drainage hose that connects to the weatherstripping experiences a force as the drainage hose bends and moves to follow the middle roof panel.

However, the weatherstripping is formed from a flexible material such as rubber, so that it cannot withstand the force from the bending and moving drainage hose, and therefore the connecting portion of the drainage hose also bends with the bending and moving of the drainage hose. As a result there may be problems. For example, water may spill into the vehicle passenger compartment from the drainage channel of the weatherstripping when the middle roof panel opens and closes, or the weatherstripping may remain deformed after the roof member has closed and no longer be able to provide the desired seal between two roof members. Also, as the roof member is repeatedly opened and closed the weatherstripping may age so that it can no longer provide the main function of the weatherstripping, which is to seal two roof members.

This invention was conceived with these problems in mind, and its purpose is to present a connection structure for a drainage hose that can withstand the force from the drainage hose even as the drainage hose bends and moves as it follows along with the opening and closing of the roof member.

### Means for Solving the Problems.

This invention connects the drainage hose to an insert panel inside the weatherstripping that reinforces the weatherstripping.

In more detail, the object of Part #1 of the invention is a vehicle comprising a connection structure for a drainage hose that has a movable roof member that can open and close a vehicle passenger compartment, weatherstripping along the edge of the roof member that extends in the direction of the edge and has a drainage channel, and a drainage hose that connects the weatherstripping to a vehicle side drain that is provided on the side of the vehicle. It also has an insert panel that is within the portion of the weatherstripping where the drainage hose is connected, to reinforce the weatherstripping, and a hose connector that is attached to the insert panel and is connected to the upstream end of the drainage hose.

With this structure, the hose connector is attached to the insert panel that reinforces the weatherstripping, and the upstream end of the drainage hose is connected to the hose connector that is attached to the insert panel, so that the insert panel can absorb the force from the drainage hose even when the drainage hose bends and moves as it follows along with the opening and closing of the roof member, thereby preventing excessive bending of the weatherstripping.

Part #2 of the invention provides a female screw or a male screw on the insert panel of Part #1 of the invention, and the hose connector is attached to the insert panel by a screw connection.

This structure concretely specifies the method of attachment of the hose connector to the insert panel. The use of a screw connection between the hose connector and a female screw or a male screw provided on the insert panel means that it is possible to easily to attach and remove the hose connector, such as when the hose connector is to be replaced. Also, with the structure of a female screw or male screw on the insert panel, the structure of the hose connector can be freely changed, which improves the general utility of the insert panel.

Part #3 of the invention forms a receptacle on the insert panel of Part #1 of the invention in order to engage the host connector, and the hose connector is attached by being engaged in the receptacle of the insert panel.

With this structure, since the method of attaching the hose connector to the insert panel is to engage the hose connector in the receptacle of the insert panel, it is not necessary to provide an additional part such as a screw for attachment purposes, so it is easier to attach the hose connector to the insert panel.

The object of Part #4 of the invention is a vehicle comprising a connection structure for a drainage hose that has a movable roof member that can open and close a vehicle passenger compartment, weatherstripping along the edge of the roof member that extends in the direction of the edge and has a drainage channel, and a drainage hose that connects the weatherstripping to a vehicle side drain that is provided on the side of the vehicle. It also has an insert panel that is within the portion of the weatherstripping where the drainage hose is connected, to reinforce the weatherstripping, and a hose connector that is formed as one piece with the insert panel and is connected to the upstream end of the drainage hose.

With this structure, where the hose connector is one piece with the insert panel and the upstream end of the drainage hose is connected to the hose connector, the insert panel can absorb the force from the drainage hose even as the drainage hose bends and moves with the opening and closing of the roof panel, making it possible to prevent excessive bending of the weatherstripping. Also, the fact that the hose connector and insert panel arc one piece means that it is possible to improve the connection strength between the hose connector and the insert panel, and no operation is necessary to attach the hose connector to the insert panel, which makes it easier to assemble.

### Effect of the Invention

According to this invention, the hose connector is attached to an insert panel that reinforces the weatherstripping, and the upstream end of the drainage hose is connected to the hose connector, which makes it possible to prevent excessive bending of the weatherstripping due to the force from the drainage hose when the roof member opens and closes, and as a result it is possible to prevent problems such as the spilling of water from the drainage channel of the weatherstripping or the bending of the weatherstripping so that it no longer serves its sealing function.

### Best Forms for Implementing the Invention.

Next we will use figures to give detailed explanations of embodiments of this invention. However, the following explanations of desirable embodiments are essentially just examples, and it is not the intention to limit this invention to such purposes or applications.

### Simple Explanation of the Figures

- Figure 1.: Side view of a vehicle with a retractable roof of this invention in the operating position.
- Figure 2.: Side view of a vehicle with a retractable roof in the storage position.
- Figure 3.: Side view that shows the link mechanism of a retractable roof in the operating position.
- Figure 4.: Decomposed strabismus view of the link mechanism.
- Figure 5.: Side view showing the link structure of a retractable roof in a position between the operating position and the storage position.
- Figure 6.: Side view showing the link structure of a retractable roof in a position between the operating position and the storage position.
- Figure 7.: Side view that shows the link mechanism of a retractable roof in the storage position.
- Figure 8.: Strabismus view looking diagonally from the rear of the car when the retractable roof is in the operating position.
- Figure 9.: Strabismus view looking diagonally from the rear at the weatherstripping along the lower edge of the rear window and middle roof panel.
- Figure 10.: Cross-section along the line X-X in Figure 9.
- Figure 11.: Cross-section along the line XI-XI in Figure 9.
- Figure 12.: Enlarged strabismus view of the edge of the lower rear weatherstripping seen from the outside of the vehicle passenger compartment.
- Figure 13.: Cross-scction along the line XIII-XIII in Figure 9.
- Figure 14.: Enlarged strabismus view of the edge of the lower rear weatherstripping seen from the outside of the vehicle passenger compartment.
- Figure 15.: Figure corresponding to Figure 14 when the drainage hose is attached to the lower rear weatherstripping.
- Figure 16.: Rear view that shows the rear window and rear side trim when the retractable roof is in the operating position.
- Figure 17.: Side view that shows the rear window and rear side trim when the retractable roof is in the operating position.
- Figure 18.: Cross-section that shows the connection structure of the drainage hose and vehicle side drain.
- Figure 19.: Side view that shows the rear window and rear side trim when the retractable roof is in the storage position.
- Figure 20.: Cross-section corresponding to that of Figure 13, for the connection structure of the drainage hoe and weatherstripping in Embodiment #2.
- Figure 21.: Figure corresponding to that of Figure 12, for the edge of the lower rear weatherstripping in Embodiment #2.
- Figure 22.: Figure corresponding to Figure 15, for the connection structure of the drainage hose and weatherstripping in Embodiment #2.
- Figure 23.: Cross-section corresponding to that of Figure 13, for the connection structure of the drainage hoe and weatherstripping in Embodiment #3.

### Embodiment #1

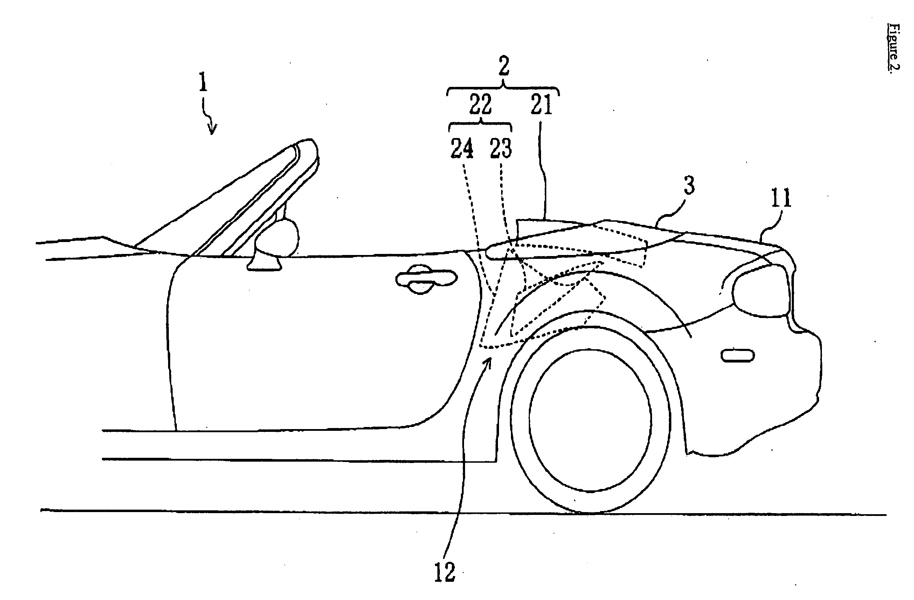

Figures 1 and 2 are representative side views of a vehicle [1] that has a retractable roof of this invention. The retractable roof (roof member) [2] includes a front roof panel [21] that covers the top of the vehicle passenger compartment and a rear roof panel [22] that is located behind the front roof panel [21] and covers the back of the vehicle passenger compartment. The rear roof panel [22] includes a rear window [23] made of a transparent material, and a middle roof panel [24] that is located between the front roof panel [21] and rear window [23] and forms the pillars of the vehicle [1].

Trunk space is provided in the rear of the vehicle [1], and its opening is covered by a trunk lid [11] that can be opened and closed. Between the vehicle passenger compartment [13] and the trunk space there is a storage compartment [12] that is open at the top and in which the retractable roof [2] is stored.

A deck lid [3] is provided for the opening at the top of the storage compartment [12]. When the retractable roof [2] is covering the vehicle passenger compartment [13] (so that the roof [2] is in the operating position described later), the deck lid [3] is positioned between the rear edge of the roof [2] and the edge of the opening of the storage compartment [12]. In this way the deck lid [3] covers the opening at the top of the storage compartment [12], which is open at the top at that location.

By using a link mechanism that is not shown in Figures 1 and 2, the retractable roof [2] can change its position between an operating position (sec Figure 1) where it covers the vehicle passenger compartment [13], and a storage position (see Figure 2) where it is stored in the storage compartment and the vehicle passenger compartment [13] is open. And, the deck lid [3] uses a link mechanism (not shown), separate from the link mechanism that changes the position of the retractable roof [2], to change its position between an operating position (see Figures 1 and 2) where it covers part of the opening at the top of the storage compartment [12], and a removed position (see the broken line in Figure 1) in which it has moved diagonally upward behind the operating position so that the opening at the top of the storage compartment [12] is open.

Next we will use Figures 1 and 2 to provide a simple explanation of the operation that changes the position of the retractable roof [2], namely, the operation of switching from the state where the retractable roof [2] covers the vehicle passenger compartment [13] to the state where the vehicle passenger compartment [13] is open. First, the deck lid [3] uses its link mechanism to move from the operating position shown by solid lines in Figure 1 to the removed position shown by broken lines, opening the top of the storage compartment [12]. At the same time, the link mechanism of the retractable roof [2] operates, so that the middle roof panel [24] rotates toward the rear around a certain axis of rotation (rotating in the clockwise direction in Figure 1), and the from roof panel [21] slides diagonally upward toward the rear. Also, the rear window [23] moves forward relative to the middle roof panel [24] while moving upward (see the dotted lines in Figure 1).

The dotted lines in Figure 2 show that, as the operation of the link mechanism of the retractable roof [2] continues, the front roof panel [21] and middle roof panel [24] are folded one on top of the other and stored in the storage compartment [12]. At this time the rear window [23] lies on top of the middle roof panel [24], as seen along an axis that extends in the width direction of the vehicle (as seen in Figure 2).

After the retractable roof [2] is stored in the storage compartment [12], the deck lid [3] uses its link mechanism to move from the removed position to the operating position where it covers part of the storage compartment [12]. In this way, the vehicle passenger compartment [13] is opened.

The operation of returning the retractable roof [2] from the state where the vehicle passenger compartment [13] is open to the state where it covers the vehicle passenger compartment [13] is the opposite of what was described above.

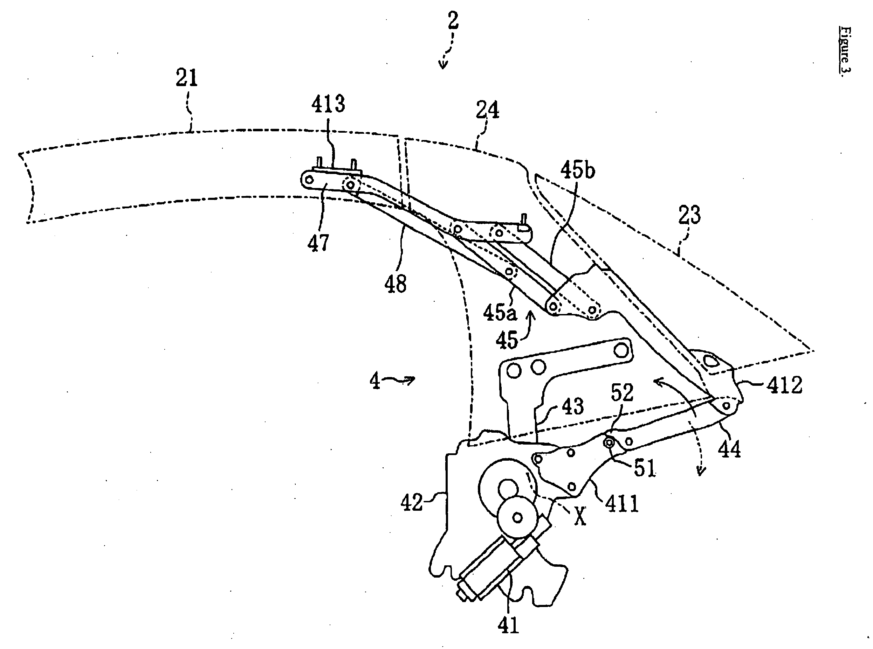

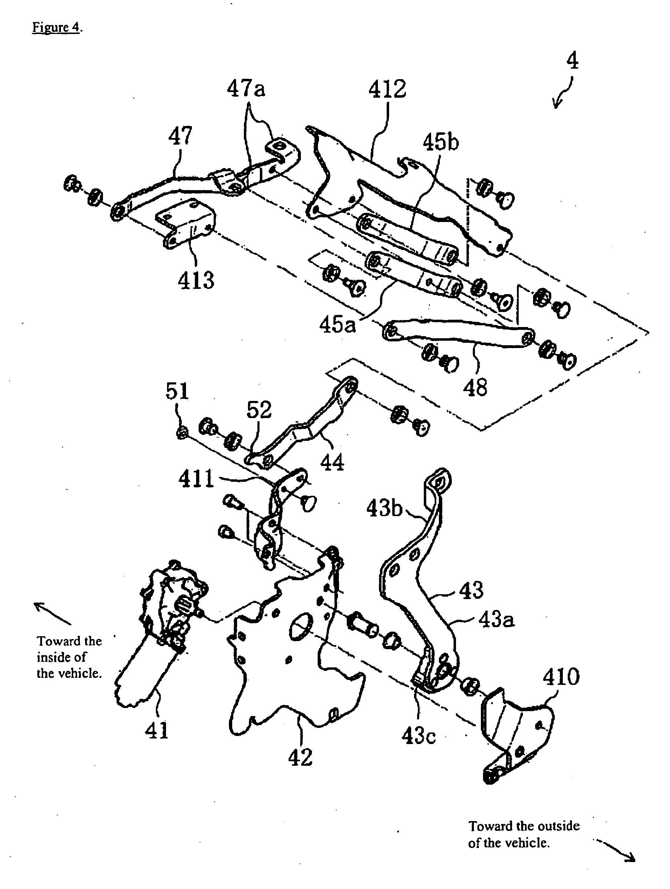

Figures 3 and 4 show the link mechanism [4] of the retractable roof [2]. The link mechanism [4] is inside the retractable roof [2], arranged on both sides in the width direction of the vehicle. Figure 3 is a side view, looking at the link mechanism [4] on the right side of the vehicle from the left side of the vehicle [1], and Figure 4 is a strabismus view that shows the decomposed link mechanism [4] on the left side in the width direction of the vehicle.

The link mechanism [4] is basically connected by a pivoting support to the front roof panel [21] and includes a four-way link composed of links #1 and #2 that are connected by pivoting supports to a member inside the vehicle.

The link mechanism [4] in this embodiment is electrically driven. The drive motor [41] that provides the driving force is fixed by a method such as bolts to a main bracket [42] that is fixed to the vehicle [1]. The main bracket [42] is a shortened plate located within the vehicle passenger compartment [12]. In this way the main bracket [42] is located in a position corresponding to the lower extent of the middle roof panel [24] when the retractable roof [2] is in its operating position.

Attached to the side of the main bracket [42] facing the outside of the vehicle is a lower arm [43]. The lower arm [43] is held between the main bracket [42] and a base plate [410] so that it is possible for it to rotate around an axis of rotation X that extends in the width direction of the vehicle, relative to the main bracket [42].

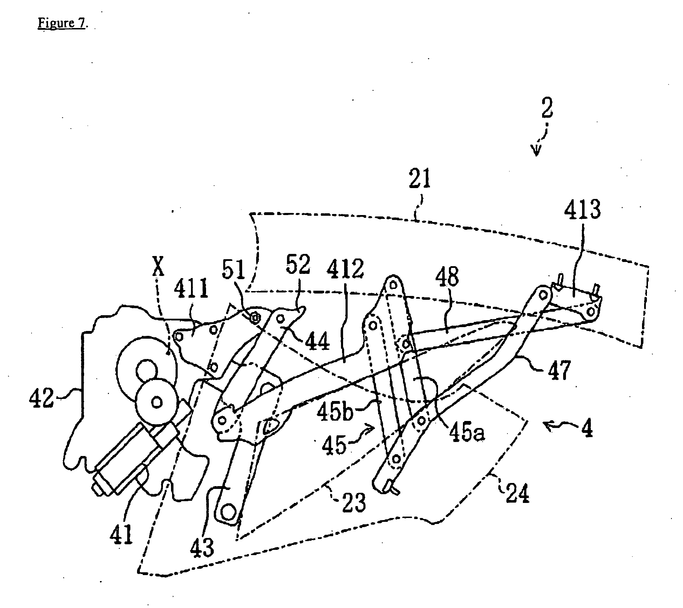

The lower arm [43] has an arm portion [43a] that extends vertically and a fixed portion [43b] that curves around the top of the arm portion [43a] and is fixed to the middle roof panel [24], as will be described later. Also, fixed to the bottom edge portion of the arm portion [43a] is a reduction gear [43c] that meshes with a drive gear that is attached to the drive shaft of the drive motor [41]. In this way, when driven by the drive motor [41], the lower arm [43] rotates around the axis of rotation X, between a position where the arm portion [43a] is upright, as shown in Figure 3, and a position where the arm portion [43a] has moved back, shown in Figure 7.

Also fixed to the main bracket [42] is a window bracket base [411] that extends backward in an upper diagonal direction, from the rear portion near the top of the main bracket [42]. A window link lever [44] is connected by a pivoting support to the rear portion of the window bracket base [411].

Through holes are formed in the front portion and rear portion of the window link lever [44]. A bushing is inserted into the through hole at the front portion of the window link lever [44], and it is fixed to the rear portion of the window bracket base [411] by a method such as a bolt. In this way, the window link lever [44] can rotate around an axis of rotation that extends in the width direction of the vehicle, relative to the window bracket base [411].

Window brackets [412] are fixed at both ends of the rear window [23] in the width direction of the vehicle. The rear portion of each window link lever [44] is attached by a pivoting support to the lower portion of the window bracket [412]. In other words, the window link lever [44] has a bushing inserted into the through hole at its rear portion, and is fixed to the lower portion of the window bracket [412] by a method such as a bolt. In this way, the window link lever [44] rotates with respect to an axis that extends in the width direction of the vehicle around the window bracket [412], or in other words, around the rear window [23].

Two attachment holes are provided at a certain interval in the front and back direction on the upper portion of the window bracket [412]. Link levers #1 and #2 [45a, 45b] are connected with pivoting supports at these two attachment holes, respectively.

The link levers #1 and #2 [45a, 45b] have about the same length, and when the retractable roof [2] is in the operating position they each face forward at a raised angle, laid out in the front and back direction of the vehicle. These link levers #1 and #2 [45a, 45b] have through holes in their upper portions and lower portions. The link levers #1 and #2 [45a, 45b] have bushings inserted into the through holes at their lower portions, and are fixed to the upper portion of the window bracket [412] by a method such as a bolt, in this way the link levers #1 and #2 [45a, 45b] rotate with respect to an axis that extends in the width direction of the vehicle relative to the window bracket [412]. That is, the link levers #1 and #2 [45a, 45b] are connected by pivoting supports to the back window [23].

As explained later, an upper arm [47] is fixed to the upper portion of the middle roof panel [24], extending forward toward the front roof panel [21]. The upper portions of the link levers #1 and #2 [45a, 45b] are connected by pivoting supports to the upper arm [47]. That is, the link levers #1 and #2 [45a, 45b] are fixed to the lower portion of the upper arm [47] by the bushings that are inserted into the through holes on their upper portions by a method such as bolts. In this way, the link levers #1 and #2 [45a, 45b] rotate with respect to an axis that extends in the width direction of the vehicle relative to the upper arm [47]. That is, the link levers #1 and #2 [45a, 45b] are connected by pivoting supports to the middle roof panel [24].

In this way the link levers #1 and #2 [45a, 45b] are connected by pivoting supports to the middle roof panel [24] and to the rear window [23]. Therefore, link levers #1 and #2 [45a, 45b] function as a four-way link (the four-way link #2, [45]) that operates between the middle roof panel [24] and rear window [23], and controls the relative motion of the middle roof panel [24] and rear window [23].

A front roof bracket [413] is fixed near the back portion of the front roof panel [21]. The front portion of the upper arm [47] is connected by a pivoting support to the front roof bracket [413]. In other words, there is a through hole in the front portion of the upper arm [47], and a bushing is inserted in this through hole on the upper arm [47], to fix it to the front roof bracket [413] by a method such as a bolt. In this way the upper arm [47] rotates with respect to an axis that extends in the width direction of the vehicle relative to the front roof bracket [413]. That is, the upper arm [47] is connected by a pivoting support to the front roof panel [21].

The front roof bracket [413] has another attachment hole, further back from the point of pivoting support (the attachment hole) to the upper arm [47]. This other attachment hole is connected by a pivoting support to the upper part of a control link [48].

When the retractable roof [2] is in the operating position, the control link [48] faces forward at a raised angle. Through holes are formed on the upper portion and lower portion of the control link [48]. And, a bushing is inserted into the through hole in the upper portion of the control link [48], fixing it to the attachment hole of the front roof bracket [413] by a method such as a bolt. In this way the control link [48] rotates with respect to an axis that extends in the width direction of the vehicle relative to the front roof panel [21]. That is, the control link [48] is connected by a pivoting support to the front roof panel [21].

An attachment hole is formed in the central portion of link lever #1 [45a]. The lower portion of the control link [48] is connected by a pivoting support to this attachment hole. In other words, a bushing is inserted into the through hole at the lower portion of the control link [48], and it is fixed to the central portion of link lever #1 [45a] by a method such as a bolt. Therefore, the control link [48] rotates with respect to an axis that extends in the width direction of the vehicle relative to link lever #1 [45a]. That is, the control link [48] is connected by a pivoting support to the four-way link #2 [45].

As explained above, the middle roof panel [24] is connected by a pivoting support to the front roof panel [21] via the upper arm [47], and is also connected by a pivoting support to the main bracket [42] via the lower arm [43]. Therefore, the middle roof panel [24] functions as one link of the pair of links that form the four-way link. Also, since the lower arm [43] is driven by the drive motor [41], this link functions as the driving link of the four-way link.

The other link (the driven link) of the pair of links that form the four-way link is comprised of the window link lever [44], rear window [43] (window bracket [412]), link levers #1 and #2 [45a, 45b], and the control link [48].

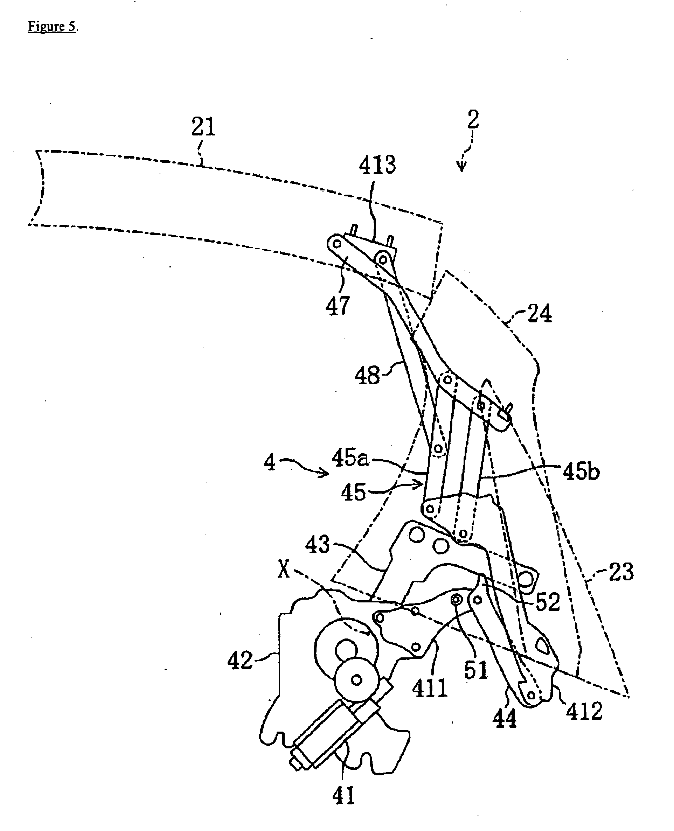

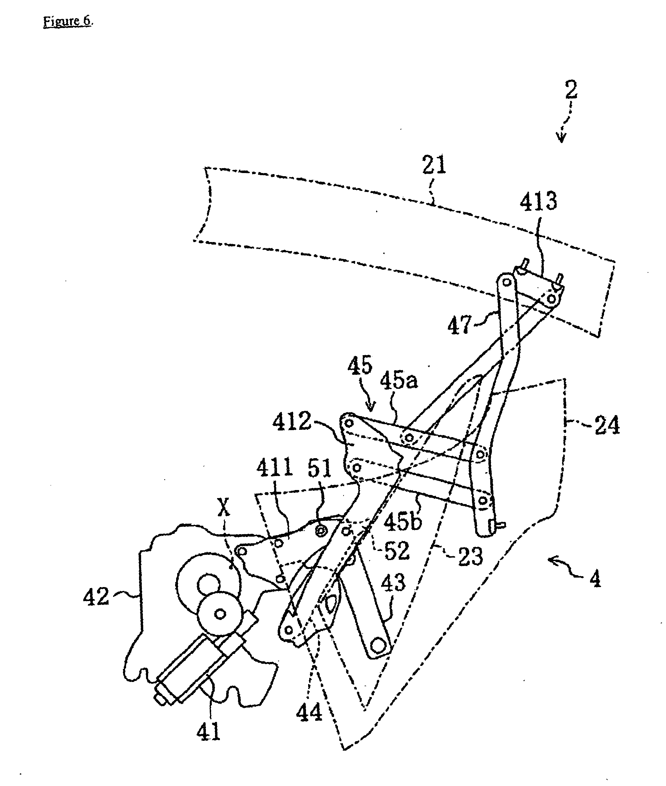

The retractable roof [2] with this structure operates as shown in Figures 3 and 5 through 7 to change its position from the operating position to the storage position. Figure 3 shows the retractable roof [2] when it is in the operating position (the closed configuration), Figure 7 shows the retractable roof [2] when it is in the storage position (the open configuration), Figure 5 shows the retractable roof [2] during the process of changing its position from the operating position to the storage position after it has gone about one-third of the way from the operating position, and Figure 6 shows the retractable roof [2] during the process of changing its position from the operating position to the storage position after it has gone about two-thirds of the way from the operating position.

First, the drive motor [41] begins working, the torque increases due to the reduction gear [43c], and the lower arm [43] begins rotating in the clockwise direction of Figure 3 around the axis of rotation X. Accompanying that rotation, the middle roof panel [24] begins to rotate in the clockwise direction (see Figures 3 and 5).

Accompanying the rotation of the middle roof panel [24], the front roof panel [21], which is connected by a pivoting support to the middle roof panel [24] (upper arm [47]), moves in the opposite way, slanting upward, but the control link [48] is connected by a pivoting support to the front roof panel [21], namely, there is a four-way link between the front roof panel [21] and the main bracket [42], and therefore the front roof panel [21] moves according to a prescribed path.

Also, accompanying the rotation of the middle roof panel [24], there is relative movement between this middle roof panel [24] and the rear window [23] due to the four-way link #2 [45]. In other words, the back window [23] rotates toward the back, while moving forward relative to the middle roof panel [24] that is rotating toward the back.

As the drive motor [41] continues working, the middle roof panel [24] rotates to be roughly on its side (see Figure 6). The front roof panel [21] moves further toward the back and is now located above the middle roof panel [24].

As the drive motor [41] still continues working, the middle roof panel [24] rotates further to the back and is stored in the storage compartment [12] (see Figure 7). At the same time, the front roof panel [21] moves downward so that it is directly above the middle roof panel [24] in the storage compartment [12]. In this way, the front roof panel [21] and middle roof panel [24] are folded one on top of the other. Also, the rear window [23] is folded on the middle roof panel [24] as seen along an axis that extends in the width direction of the vehicle.

The retractable roof [2] changes its position from the storage position to the operating position by a motion opposite to what was described above.

In a retractable roof [2] with this structure, as shown in Figure 1, weatherstripping is provided for the front roof panel [21], middle roof panel [24], and rear window [23]. In more detail, front weatherstripping [5] is provided on the front roof panel [21], from its front edge around its sides, to form a seal with the front header [14] and side windows [15]. Also, middle weatherstripping [6] is provided on the middle roof panel [24], from its front edge to its sides and along its lower edge, to form a seal with the front roof panel [21], side windows [15], and deck lid [3]. And rear weatherstripping [7] is provided on the rear window [23] along its entire perimeter to form a seal with the middle roof panel [24] and deck lid [3]. Furthermore, side weatherstripping [78] is provided on the body of the vehicle [1] where it meets the lower front edge of the middle roof panel [24], to form a seal between the middle roof panel [24] and the body. A drainage hole (not shown in the figure) is formed on the side weatherstripping [78], and a drain cover [79] is provided at the lower position of the side weatherstripping [78] on the side of the rear fender [16] within the vehicle, to catch water that drips from the drainage hole on the side weatherstripping [78] and drain it outside the vehicle.

Next we will give a more detailed explanation of the middle weatherstripping [6] and rear weatherstripping [7].

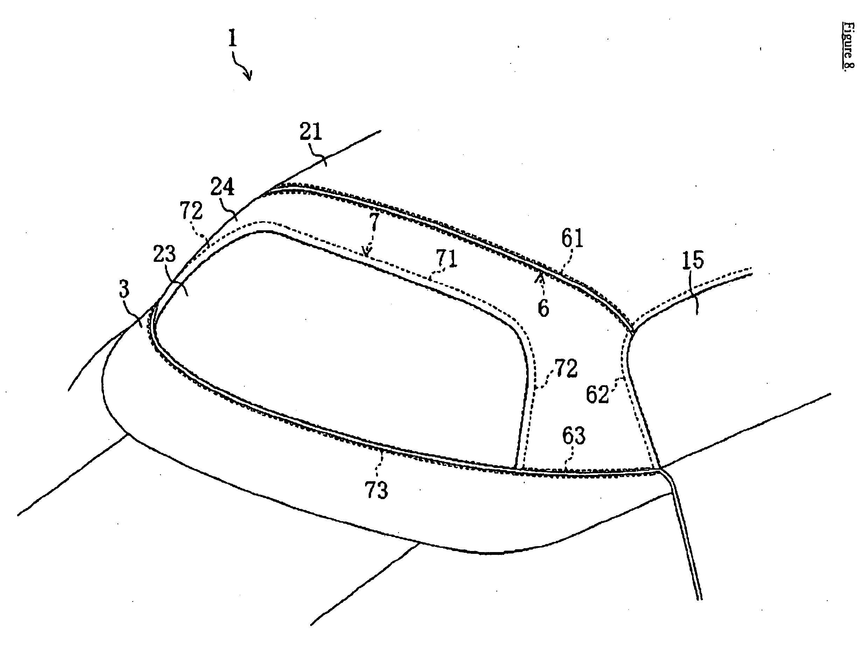

As shown in Figure 8, the middle weatherstripping [6] includes upper middle weatherstripping [61] that forms a seal with the front roof panel [21], side middle weatherstripping [62] that forms a seal with the left and right windows [15] (Figure 8 only shows the right side), and lower middle weatherstripping [63] that forms a seal with the deck lid [3].

The rear weatherstripping [7] includes upper rear weatherstripping [71] and side rear weatherstripping [72, 72] that form a seal with the middle roof panel [24], and lower rear weatherstripping [73] that forms a seal with the deck lid [3].

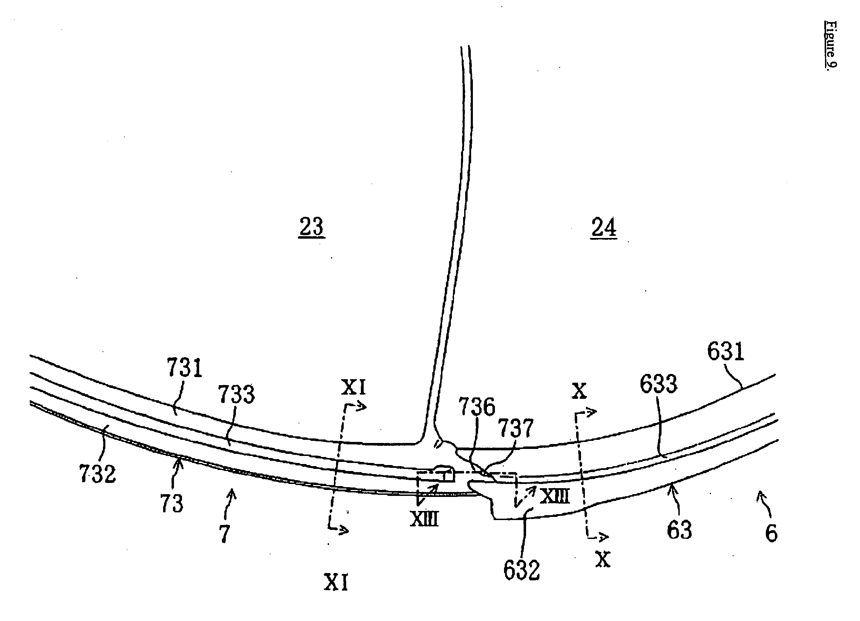

As shown in Figure 9, when the retractable roof [2] is in the closed configuration, the lower middle weatherstripping [63] and lower rear weatherstripping [73] are connected to form a continuous lower weatherstripping. When the retractable roof [2] moves into the closed configuration, the rear window [23] moves against the middle roof panel [24] from inside the vehicle passenger compartment to form the closed configuration, so that the lower rear weatherstripping [73] meets the lower middle weatherstripping [63] (Figure 9 only shows the right side) from inside the vehicle passenger compartment.

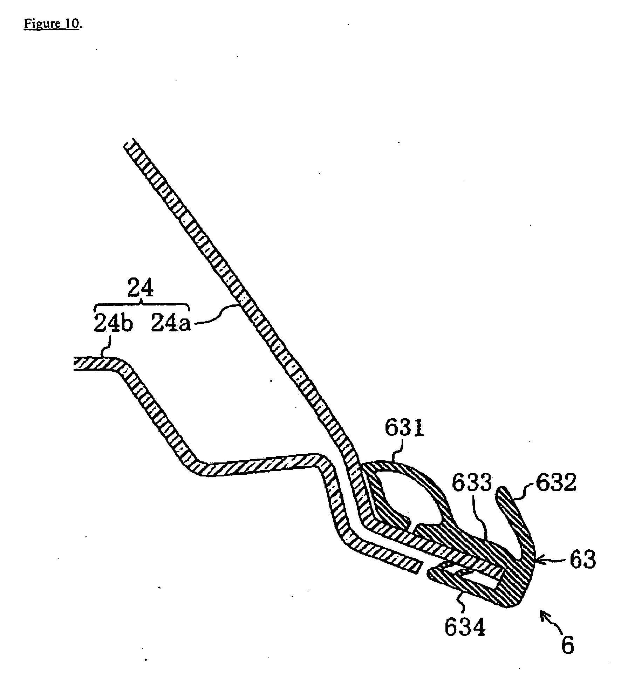

As shown in Figure 10, the middle roof panel [24] has an outer panel [24a] and an inner panel [24b], and the lower middle weatherstripping [63] is attached to the outer panel [24a]. In more detail, the lower middle weatherstripping [63] has a hollow seal portion [631] that extends along the lower edge of the outer panel [24a], a lip portion [632] located further to the outside than the seal portion [631] and extending parallel to the seal portion [631], a middle drainage channel [633] that is formed between the seal portion [631] and the lip portion [632], and a fold-back portion [634] that extends from the lower edge of the lip portion [632] parallel to the bottom of the middle drainage channel [633] folded back on the inside of the outer panel [24a]. The lower middle weatherstripping [63] is attached to the outer panel [24a] so that the bottom of the middle drainage channel [633] and the fold-back portion [634] enclose the lower edge of the outer panel [24a]. Also, at the end of the lower middle weatherstripping [63] that is toward the rear of the vehicle, that is, at the rear window end, the seal portion [631] and lip portion [632] extend out toward the rear window more than does the bottom of the middle drainage channel [633] (see Figure 9).

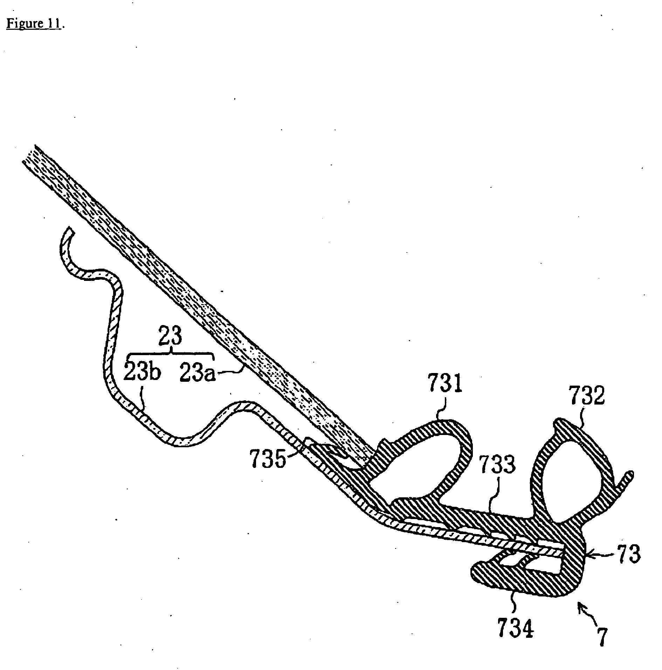

As shown in Figure 11, the rear window [23] has a window member [23a] and a support frame [23b] attached around the edge of the window member [23a], and the lower rear weatherstripping [73] is attached to the support frame [23b]. In more detail, the lower rear weatherstripping [73] has two hollow seal portions [731, 732] that extend in parallel along the lower edge of the support frame [23b], a rear drainage channel [733] that is formed between the seal portions [731, 732], a fold-back portion [734] that extends from the lower edge of the outer seal portion [732] parallel to the bottom of the rear drainage channel [733] folded back on the inside of the support frame [23b], and an extension portion [735] that extends from the lower edge of the inner seal portion [731] inside along the support frame [23b]. The lower rear weatherstripping [73] is attached to the support frame [23b] so that the extension portion [735] is inserted between the window member [23a] and the support frame [23b], and the bottom of the rear drainage channel [733] and the fold-back portion [734] enclose the lower edge of the support frame [23b].

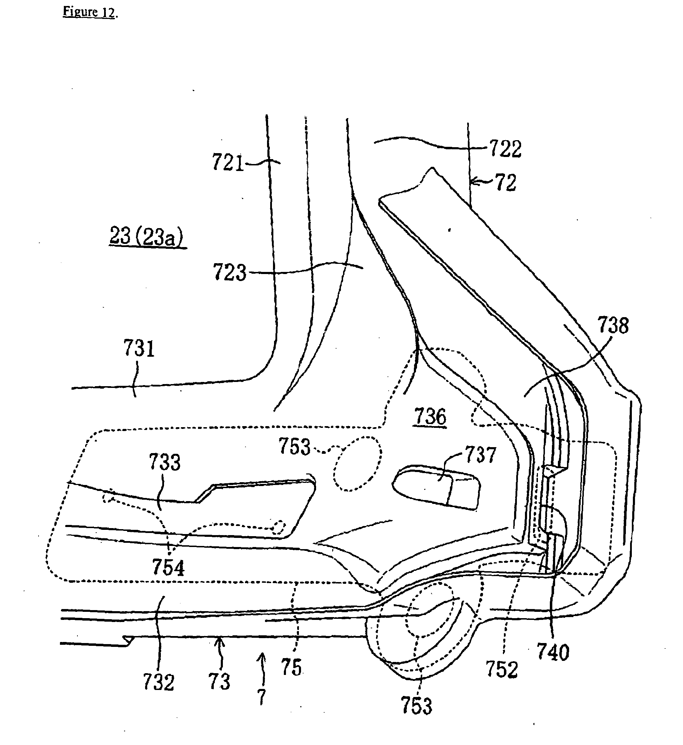

We will explain in more detail the structure of the ends of the lower rear weatherstripping [73]. The left and right ends of the lower rear weatherstripping have the same structure, so we will only explain the right end, making reference to Figure 12.

At the end of the lower rear weatherstripping [73] the inner seal portion [731] and outer seal portion [732] are joined above the rear drainage channel [733]. At this junction a contact surface [736] that is connected to the lower middle weatherstripping [63] is formed, and through this contact surface [736] a connecting hole [737] is formed, which connects to the rear drainage channel [733]. The contact surface [736] faces the lower middle weatherstripping [63], and it is an inclined surface that tilts from the outside of the vehicle passenger compartment to the inside.

Also, the side rear weatherstripping [72] is continuous with the inner seal portion [731] at the ends of the lower rear weatherstripping [73] (Figure 12 only shows the right side). The side rear weatherstripping [72] has two seal portions [721, 722] that extend in parallel along the side edge of the rear window [23], and a side drainage channel [723] that is formed between the seal portions [721, 722]. Also, although it isn't shown in the figure, the side rear weatherstripping [72] is attached to the rear window [23] by an attachment mechanism similar to that of the lower rear weatherstripping [73]. The lower edge of the side rear weatherstripping [72] is continuous with the inner seal portion [731] of the lower rear weatherstripping [73], and it is formed so that water that flows into the side drainage channel [723] goes past the seal portion [731] of the lower rear weatherstripping [73] and into the rear drainage channel [733].

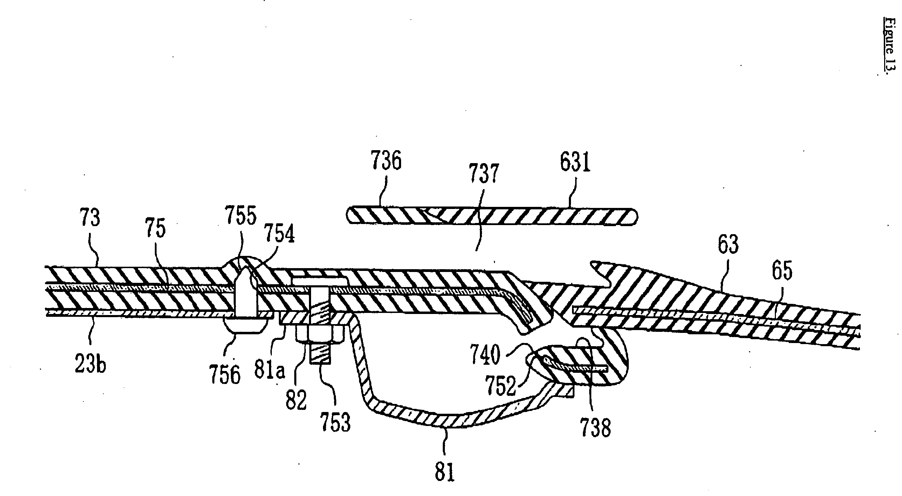

Also, the lower rear weatherstripping [73] has a water-collecting channel [738] that is formed on a portion of the lower middle weatherstripping [63] that is lower than the contact surface [736] and that goes lower inside the vehicle passenger compartment than does the contact surface [736]. This water-collecting channel [738] extends from the lower edge of the outer seal portion [722] of the side rear weatherstripping [72] so as to enclose the contact surface [736]. As shown in Figure 13, the water-collecting channel [738] has a drainage hole [740] that goes through it from the outside of the vehicle passenger compartment to the inside of the vehicle passenger compartment.

The edge of the lower rear weatherstripping [73] that is formed in this way has a piece that protrudes toward the middle roof panel [24] more than the support frame [23b] does. However, when the retractable roof [2] goes into the closed configuration, this edge of the lower rear weatherstripping [73] meets and joins with the edge of the lower middle weatherstripping [63] and must be strong enough so that it can securely join. Therefore, as shown in Figures 12 and 13, there is a metal insert panel [75] within the edge of the lower rear weatherstripping [73].

A metal insert panel [65] is also provided within the edge of the lower middle weatherstripping [63] that is near the rear window [23]. In this way, the edge of the lower middle weatherstripping [63] and the edge of the lower rear weatherstripping [73] are made stronger, so that the two edges can securely meet and join when the retractable roof [2] is in the closed configuration.

A through hole [752] is formed in the insert panel [75] in order to form the drainage hole [740]. Also, stud bolts [753, 753] are welded, protruding on the vehicle passenger compartment side, for attaching the collection dish [81] that will be explained below to the insert panel [75]. And, attachment holes [754, 754] are provided through the insert panel [75] in order to attach the support frame [23b].

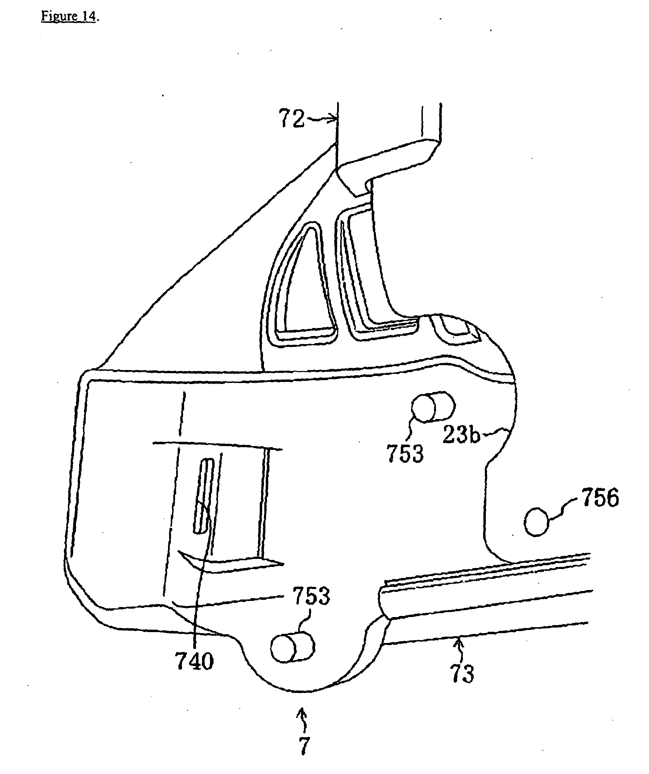

The insert panel [75] formed in this way is inserted into the mold that is used to form the edge of the lower rear weatherstripping [73], so that it is formed as one piece with the edge of the lower rear weatherstripping [73]. As shown in Figure 14, the stud bolts [753, 753] protrude from the vehicle passenger compartment side of the edge of the lower rear weatherstripping [73] that is formed in this way.

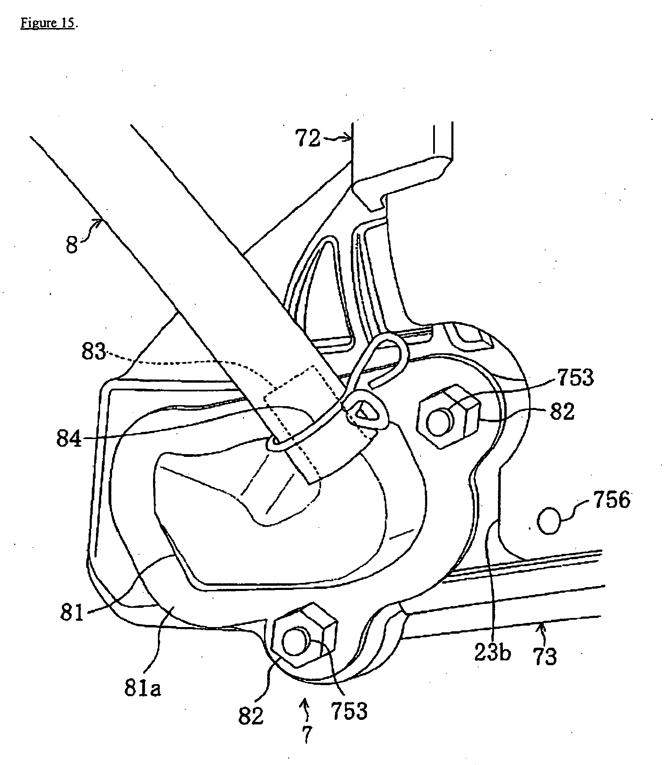

As shown in Figures 13 and 15, a collection dish [81] is attached to the edge of the lower rear weatherstripping [73] on the side within the vehicle passenger compartment so as to cover the drainage hole [740]. The bottom of this collection dish [81] has the shape of a sunken dish, and a flange [81a] is formed on its open edge. And, the collection dish [81] is attached to the lower rear weatherstripping [73] by a screw connection at the flange [81a] using the stud bolts [753, 753] and nuts [82, 82]. In other words, the collection dish [81] is attached to the insert panel [75] within the lower rear weatherstripping [73]. This collection dish [81] corresponds to the hose connector.

Also, the insert panel [75] has a screw connection to the support frame [23b] through screw grommets [755] that are connected to the attachment holes [754] and screws [756] that are screwed into the screw grommets [755].

A cylindrical connection portion [83] protrudes from the collection dish [81], and the upstream end of the drainage hose [8] is attached to the outside of the connection portion [83]. A hose clip [84] is attached to the upstream end of the drainage hose [8] to prevent the drainage hose [8] from coming off the connection portion [83].

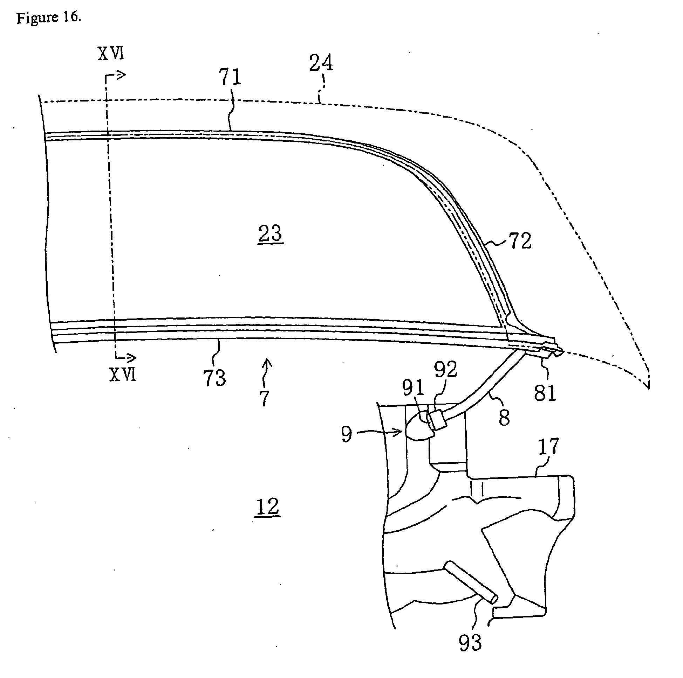

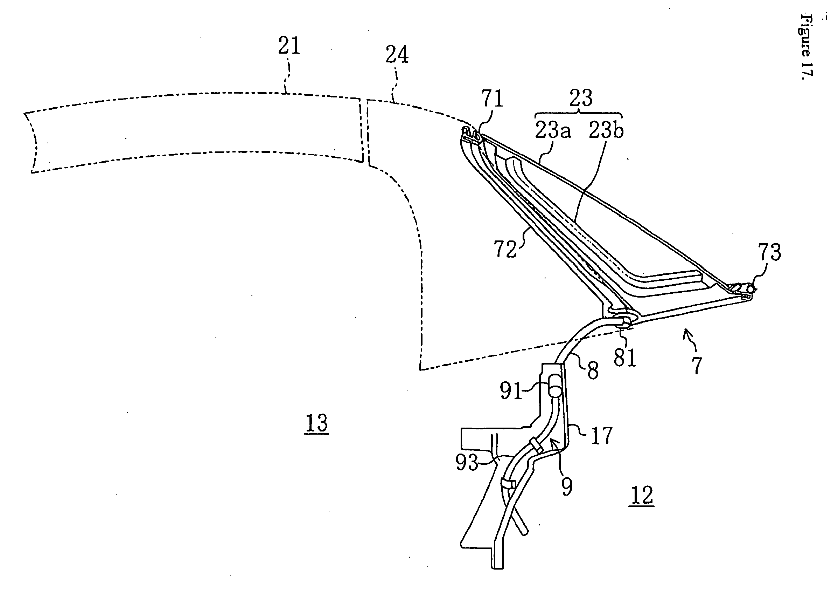

The drainage hose [8] is rubber and is flexible. As shown in Figures 16 and 17, the downstream end of the drainage hose [8] is attached to a vehicle side drain [9] that is provided on a rear side trim [17] that is an internal trim that separates the storage compartment [12] from the vehicle passenger compartment [13].

The vehicle side drain [9] has a cylindrical member [91] that is attached to the rear side trim [17], a cap [92] that is attached to a portion of the cylindrical member [91] that protrudes on the side of the roof storage compartment, and a vehicle side drainage hose [93] that is connected to the portion of the cylindrical member [91] that protrudes on the side of the vehicle passenger compartment. The vehicle side drainage hose is attached in several places to the surface of the rear side trim [17] on the side of the vehicle passenger compartment, and its downstream portion passes through the rear side trim [17] to the side of the roof storage compartment. This isn't shown in the figure, but on the floor of the storage compartment [12], at the lower position of the downstream end of the vehicle side drainage hose [93], there is a floor drain that collects water that drains from the vehicle side drainage hose [93] and allows it to drain outside the vehicle.

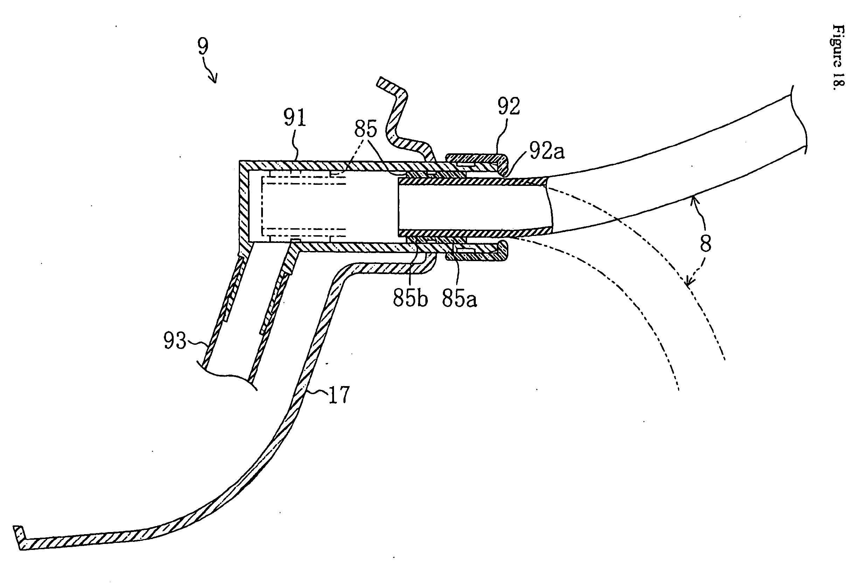

Next we will use Figure 18 to explain in more detail the connection structure of the drainage hose [8] and vehicle side drain [9].

The cap [92] has an insertion hole [92a] whose inner diameter is larger than the outer diameter of the drainage hose [8].

The drainage hose [8] is inserted into the cylindrical portion [91] through the insertion hole [92a] of the cap [92], and a stopper [85] is provided on its downstream end. The stopper [85] has large circular portions [85a. 85b] that fit into the cylindrical member [91]. The outer diameter of these large circular portions [85a, 85b] is larger than the inner diameter of the insertion hole [92a] of the cap [92].

As a result, the drainage hose [8] that is connected to the vehicle side drain [9] can rotate freely with respect to the vehicle side drain [9], and can freely move in and out of the insertion hole [92a] (see the dotted lines in the figure). The outer diameter of the large circular portion [85a] of the stopper [85] is larger than the inner diameter of the insertion hole [92a] of the cap [92], so that the large circular portion [85a] catches on the edge of the opening of the insertion hole [92a] of the cap [92], and the drainage hose [8] does not come out of the vehicle side drain [9]. The length that can freely move in and out is determined by the depth of the cylindrical portion [91]. In other words, by changing the depth it is possible to make the length of the drainage hose [8] that can freely move in and out any desired value.

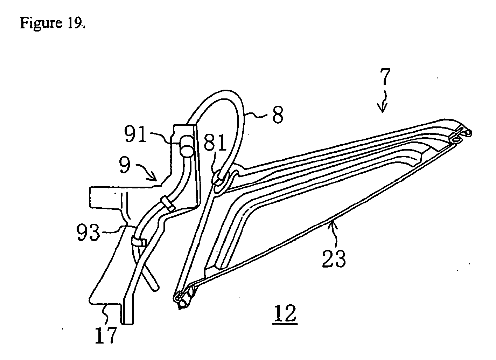

In this way, as shown in Figures 17 and 19, the drainage hose [8] that is connected to the vehicle side drain [9] has its upstream end attached to the rear window [23], with a configuration that can follow along with the opening and closing of the rear window [23]. At such times, accompanying the opening and closing of the rear window [23], the distance between the collection dish [81] on the rear window [23] end and the cap [92] of the vehicle side drain [9] changes, and the axis of the drainage hose [8] twists. The drainage hose [8] freely rotates relative to the insertion hole [92a] and freely moves in and out, and so, responding to the change in the distance between the collection dish [81] and the cap [92] that accompanies the opening and closing of the rear window [23], it can freely move in and out relative to the insertion hole [92a] and, responding to the twisting of the axis of the drainage hose [8], it can freely rotate.

With this type of drainage structure for a retractable roof [2], in particular with a drainage structure on the rear portion of the vehicle, the water that is conveyed along the surface of the rear window [23] and the water that is conveyed along the surface of the middle roof panel [24] flow into the rear drainage channel [733] of the lower rear weatherstripping [73] and the middle drainage channels [633] of the lower middle weatherstripping [63], respectively. Also, the water that flows along the side drainage channels [723] of the side rear weatherstripping [72] flows into the rear drainage channel [733]. The water in the rear drainage channel [733] flows into the middle drainage channels [633] through the connection holes [737] on the left and right ends of the rear drainage channel [733]. The water in the middle drainage channels [633] flows to the front portions of the middle drainage channels [633], where it flows from those front portions into the side weatherstripping [78], and it drips from the side weatherstripping [78] into the drain cover [79], and is drained out of the vehicle through the drain cover [79]. Meanwhile, the water in the collection dish [81] is led to the vehicle side drain [9] through the drainage hose [8] and drained outside the vehicle from the vehicle side drain [9].

At the junction of the lower middle weatherstripping [63] and lower rear weatherstripping [73] it is possible that the water flowing through the rear drainage channel [733] would not flow well into the middle drainage channels [633], but instead leak from the space between the lower middle weatherstripping [63] and lower rear weatherstripping [73]. In this embodiment there is a water-collecting channel [738] at the edge of the lower rear weatherstripping [73] so the water that leaks in that way will be collected in the water-collecting channel [738]. The water in the water-collecting channel [738] flows through the drainage hole [740] into the collection dish [81]. The water in the collection dish [81] is led by the drainage hose [8] to the vehicle side drain [9], and it drains out of the vehicle from the vehicle side drain [9]. The water that flows through the rear drainage channel [733] and middle drainage channels [633] may overflow these drainage channels [733, 633], and the water that overflows is drained along the surface of the deck lid [3] or the surface of the rear fender [16].

Therefore, according to Embodiment #1, even as the drainage hose [8] bends and moves with the opening and closing of the rear window [23], the collection dish [81] that is connected to the upstream end of the drainage hosc [8] is attached to the insert panel [75] within the lower rear weatherstripping [73], so that the insert panel [75] can absorb the force from the drainage hose [8], which makes it possible to prevent excessive bending of the lower rear weatherstripping [73].

As a result, when the rear window [23] opens and closes, it is possible to prevent a large deformation in the edge of the lower rear weatherstripping [73] and the spilling of water from the rear drainage channel [733] into the vehicle passenger compartment, and it is also possible to prevent a permanent, large deformation in the edge of the lower rear weatherstripping [73] so that, as shown in Figure 13, the lower rear weatherstripping [73] and lower middle weatherstripping [63] can securely join.

Also, the collection dish [81] has a screw connection using the stud bolts [753, 753] that protrude from the lower rear weatherstripping [73], so it is easy to replace the collection dish [81] by opening the screw connection.

And, the fact that the attachment is made to stud bolts [753, 753] means that it is possible to attach an arbitrary collection dish [81], improving the general utility of the insert panel [75] and thereby the rear weatherstripping [7].

In Embodiment #1 the stud bolts [753, 753] are welded to the insert panel [75], and the collection dish [81] has a screw connection to the insert panel [75] using the stud bolts [753, 753], but it is not limited to this. For example, it is possible to provide a weld nut on the insert panel [75] and form a screw connection between the insert panel [75] and the flange [81a] of the collection dish [81] by screwing a bolt on the weld nut. Or, it is possible to tap a screw hole in the insert panel in order to form a screw connection between the insert panel [75] and the flange [81a] of the collection dish [81]. In other words, it is possible to use any structure as long as it can form a screw connection between the insert panel [75] and the flange [81a] of the collection dish [81].

The insert panel [75] may also be made of a resin.

### Embodiment #2

Next we will explain a retractable roof [2] for Embodiment #2 of this invention. Embodiment #2 has a different structure from Embodiment #1 for attaching the drainage hose [8] to the lower rear weatherstripping [73]. We use the same symbols for structures that are the same as in Embodiment #1 and omit their explanation.

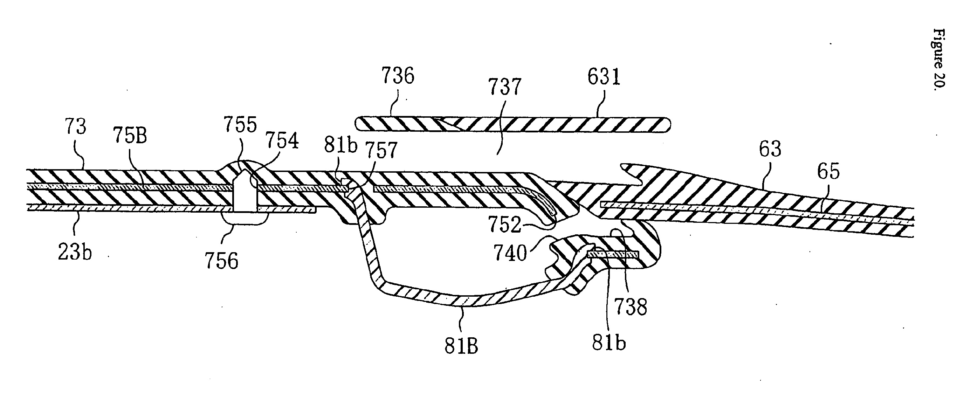

Figures 20 through 22 show the structure for attaching the drainage hose [8] in Embodiment #2.

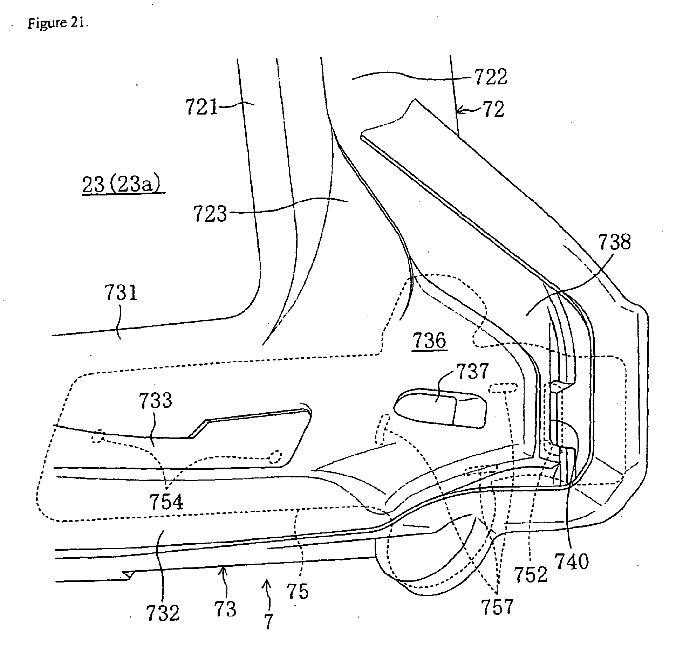

Connecting holes [757, 757, ...] (only shown in Figure 21) are formed on the insert panel [75B] of Embodiment #2 to connect the collection dish [81B]. And, there is no flange on the opening of the collection dish [81B], as there was in the collection dish [81] of Embodiment #1, but rather there are multiple connecting claws [81b, 81b, ...] to connect to the connecting holes [757, 757, ...] and to the through hole [752].

In other words, the collection dish [81B] is attached to the insert panel [75B] by connecting the connecting claws [81b, 81b,...] to the connecting holes [757, 757, ...] and through hole [752] of the insert panel [75B]. That is, the connecting holes [757, 757, ...] and through hole [752] correspond to the connection portion.

The insert panel [75B] that is attached to the collection dish [81B] is inserted into the mold that is used to form the edge of the lower rear weatherstripping [73] in order to form the lower rear weatherstripping [73], so that the lower rear weatherstripping [73] is one piece with the insert panel [75B] and collection dish [81B]. The collection dish [81B] may be made of a metal or resin.

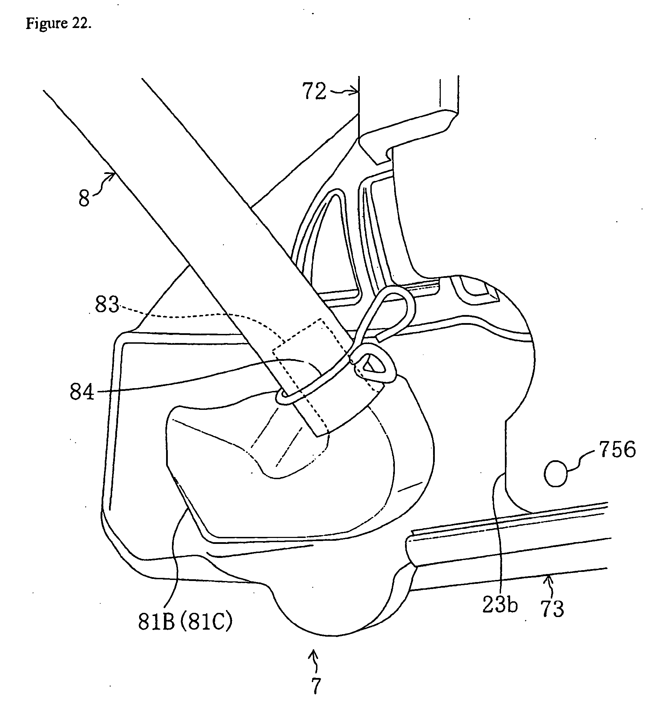

As shown in Figure 22, the collection dish [81B] formed in this way is provided so as to protrude on the surface of the lower rear weatherstripping [73] that is inside the vehicle passenger compartment. The upstream end of the drainage hose [8] is connected to the connection portion [83] of the collection dish [81].

Therefore, in Embodiment #2, as in Embodiment #1, the insert panel [75B] can absorb the force of the drainage hose [8] even if the drainage hose [8] bends and moves with the opening and closing of the rear window [23], so it is possible to prevent excessive bending of the lower rear weatherstripping [73].

As a result, when the rear window [23] opens and closes, it is possible to prevent a large deformation in the edge of the lower rear weatherstripping [73] and the spilling of water from the rear drainage channel [733] into the vehicle passenger compartment, and it is also possible to prevent a permanent, large deformation in the edge of the lower rear weatherstripping [73] so that, as shown in Figure 13, the lower rear weatherstripping [73] and lower middle weatherstripping [63] can securely join.

Also, attaching the collection dish [81B] to the insert panel [75B] by connecting the connection claws [81b, 81b,...] to the connection holes [757, 757, ...] and through hole [752] of the insert panel [75B] makes it easier to attach as compared to a structure with a screw connection. And, the collection dish [81B] is formed as one piece with the lower back weatherstripping [73], so that when the rear window [23] and rear weatherstripping [7] are assembled there is no need for an operation to attach the collection dish [81B] to the lower rear weatherstripping [73], which makes the assembly easier.

In Embodiment #2 the multiple connection claws [81b, 81b, ...] of the collection dish [81B] are connected to the connection holes [757, 757, ...] and through hole [752] of the insert panel [75B], but it is not limited to this. For example, it is possible to provide an attachment opening in the insert panel [75B], large enough to surround the through hole [752], and connect the multiple connection claws [81b, 81b, ...] to the connection opening. In other words, an arbitrary structure can be used as long as it is possible to connect the collection dish [81B] to the insert panel [75B].

Also, the insert panel [75B] may be made of metal or resin.

### Embodiment #3

Next we will explain a retractable roof [2] for Embodiment #3 of this invention. Embodiment #3 has a different structure from Embodiment #1 for attaching the drainage hose [8] to the lower rear weatherstripping [73]. We use the same symbols for structures that are the same as in Embodiment #1 and omit their explanation.

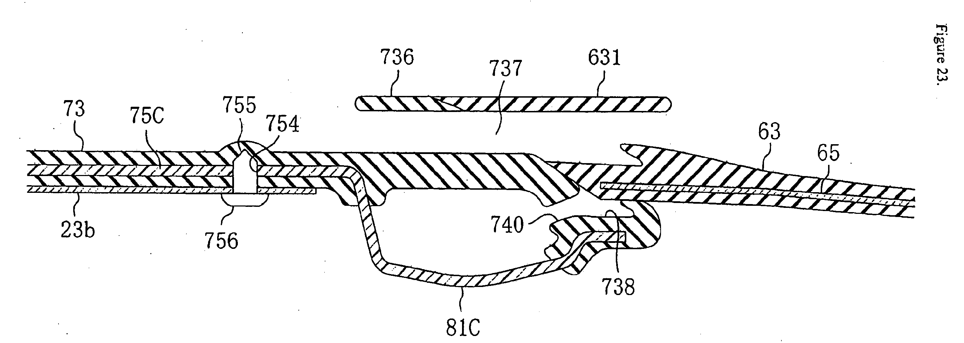

Figure 23 shows the structure for attaching the drainage hose [8] in Embodiment #3.

The collection dish [81C] is formed as a single piece with the insert panel [75C] in Embodiment #3. The insert panel [75C] and collection dish [81C] are formed of a resin or metal that has great strength and heat resistance.

By inserting the insert panel [75C] and collection dish [81C] in the mold that is used to form the lower edge of the lower rear weatherstripping [73], when forming the lower rear weatherstripping [73], the lower rear weatherstripping [73] is formed as one piece with the insert panel [75C] and collection dish [81C].

In this way, the collection dish [81C] is provided so as to protrude on the side of the lower rear weatherstripping [73] that is inside the vehicle passenger compartment. The upstream end of the drainage hose (8) is connected to the connection portion [83] of the collection dish [81C]. The outer appearance of the lower rear weatherstripping is the same as that of Embodiment #2, as shown in Figure 22.

Therefore, in Embodiment #3, as in Embodiment #1, the insert panel [75B] can absorb the force of the drainage hose [8] even if the drainage hose [8] bends and moves with the opening and closing of the rear window [23], so it is possible to prevent excessive bending of the lower rear weatherstripping [73].

As a result, when the rear window [23] opens and closes, it is possible to prevent a large deformation in the edge of the lower rear weatherstripping [73] and the spilling of water from the rear drainage channel [733] into the vehicle passenger compartment, and it is also possible to prevent a permanent, large deformation in the edge of the lower rear weatherstripping [73] so that, as shown in Figure 13, the lower rear weatherstripping [73] and lower middle weatherstripping [63] can securely join.

And, the collection dish [81C] is formed as one piece with the insert panel [75C], which makes it possible to improve the connection strength between the collection dish [81C] and the insert panel [75C].

Also, because the collection dish [81C] and insert panel [75C] are formed as one piece, when the lower rear weatherstripping [73] is formed, there is no need for an operation to attach the collection dish [81C] to the insert panel [75C], which makes it possible to improve the manufacturing process.

### Other Embodiments

This invention may also take the following forms compared to the above embodiments.

In the above embodiments the drainage hose [8] was connected to the edge of the lower rear weatherstripping [73], but it is not limited to this. In other words, the drainage hose [8] may be connected to any part of the weatherstripping as long as the drainage hose [8] is connected to the weatherstripping. In any case the insert panel is placed within the part of the weatherstripping to which the drainage hose [8] is connected and the collection dish [81] is either attached to the insert panel or formed as one piece with it.

### Industrial Usability

As explained above, this invention pertains to a connection structure for a drainage hose that is connected to weatherstripping that is provided on a movable roof.

### Explanation of Symbols

- 13: Vehicle passenger compartment.
- 2: Retractable roof (roof member).
- 21: Front roof panel (roof member).
- 23: Rear window (roof member).
- 24: Middle roof panel (roof member).
- 73: Lower rear weatherstripping (weatherstripping).
- 733: Rear drainage channel (drainage channel).
- 75,: Insert panel.
- 75B,: Insert panel.
- 75C: Insert panel.
- 752: Through hole (receptacle).
- 757: Connection hole (receptacle).
- 8: Drainage hose.
- 81,: Collection dish (hose connector).
- 81B,: Collection dish (hose connector).
- 81C: Collection dish (hose connector).

## Claims

1. A vehicle comprising a movable roof member (23) that can open and close a vehicle passenger compartment, weatherstripping (73) along the edge of said roof member (23) that extends in the direction of the edge and has a drainage channel (738), and a drainage hose (8) that connects said weatherstripping (73) to a vehicle side drain that is provided on the side of the vehicle, wherein the drainage hose bends with the opening and closing of the roof member,
**characterized by**
a connection structure for the drainage hose comprising an insert panel (75) that is within the portion of said weatherstripping (73) where said drainage hose (8) is connected, to reinforce said weatherstripping (73), anda hose connector (81) that is attached to said insert panel (75) and is connected to the upstream end of said drainage hose (8).

2. A vehicle as in Claim 1 wherein a female screw or a male screw (753) is provided on said insert panel (75), and said hose connector (81) is attached to said insert panel (75) by a screw connection.

3. A vehicle as in Claim 1 wherein a receptacle (757) is formed on said insert panel (75B) for engaging said hose connector (81 B), and said hose connector is attached by being engaged in said receptacle of said insert panel.

4. A vehicle comprising a movable roof member (23) that can open and close a vehicle passenger compartment, weatherstripping (73) along the edge of said roof member (23) that extends in the direction of the edge and has a drainage channel (738), and a drainage hose (8) that connects said weatherstripping (73) to a vehicle side drain that is provided on the side of the vehicle, wherein the drainage hose bends with the opening and closing of the roof member,
**characterized by**
a connection structure for a drainage hose comprising an insert panel (75C) that is within the portion of said weatherstripping (73) where said drainage hose (8) is connected, to reinforce said weatherstripping, and a hose connector (81 C) that is formed as one piece with said insert panel (75C) and is connected to the upstream end of said drainage hose (8).

## Patentansprüche

1. Fahrzeug mit einem beweglichen Dachelement (23), das einen Fahrzeuginnenraum öffnen und schließen kann, einem Dichtungsprofil (73) entlang der Kante des Dachelements (23), das sich in Richtung der Kante erstreckt und einen Ablaufkanal (738) aufweist, sowie einem Ablaufschlauch (8), der das Dichtungsprofil (73) mit einem fahrzeugseitigen Ablauf verbindet, der auf der Seite des Fahrzeugs vorgesehen ist, wobei sich der Ablaufschlauch beim Öffnen und Schließen des Dachelements biegt,
**gekennzeichnet durch**
eine Verbindungsstruktur für den Ablaufschlauch, die eine Einlegeplatte (75) umfasst, die sich in dem Abschnitt des Dichtungsprofils (73) befindet, wo der Ablaufschlauch (8) angeschlossen ist, um das Dichtungsprofil (73) zu verstärken, und einen Schlauchanschluss (81), der an der Einlegeplatte (75) befestigt ist und mit dem stromaufwärtigen Ende des Ablaufschlauchs (8) verbunden ist.

2. Fahrzeug nach Anspruch 1, wobei eine Mutter oder eine Schraube (753) auf der Einlegeplatte (75) vorgesehen ist und der Schlauchanschluss (81) durch eine Schraubverbindung an der Einlegeplatte (75) befestigt ist.

3. Fahrzeug nach Anspruch 1, wobei eine Aufnahme (757) auf der Einlegeplatte (75B) ausgebildet ist, um an dem Schlauchanschluss (81B) anzugreifen, und der Schlauchanschluss **dadurch** befestigt wird, dass er in die Aufnahme der Einlegeplatte eingreift.

4. Fahrzeug mit einem beweglichen Dachelement (23), das einen Fahrzeuginnenraum öffnen und schließen kann, einem Dichtungsprofil (73) entlang der Kante des Dachelements (23), das sich in Richtung der Kante erstreckt und einen Ablaufkanal (738) aufweist, sowie einem Ablaufschlauch (8), der das Dichtungsprofil (73) mit einem fahrzeugseitigen Ablauf verbindet, der auf der Seite des Fahrzeugs vorgesehen ist, wobei sich der Ablaufschlauch beim Öffnen und Schließen des Dachelements biegt,
**gekennzeichnet durch**
eine Verbindungsstruktur für einen Ablaufschlauch, die eine Einlegeplatte (75C) umfasst, die sich in dem Abschnitt des Dichtungsprofils (73) befindet, wo der Ablaufschlauch (8) angeschlossen ist, um das Dichtungsprofil zu verstärken, und einen Schlauchanschluss (81C), der einstückig mit der Einlegeplatte (75C) ausgebildet ist und mit dem stromaufwärtigen Ende des Ablaufschlauchs (8) verbunden ist.

## Revendications

1. Véhicule comprenant un élément de toit mobile (23) qui peut ouvrir et fermer un habitacle du véhicule, une bande d'étanchéité (73) le long du bord dudit élément de toit (23) qui s'étend dans la direction du bord et qui possède un canal de drainage (738), et un tuyau de drainage (8) qui relie ladite bande d'étanchéité (73) à un drain latéral de véhicule qui est réalisé sur le côté du véhicule, où le tuyau de drainage se courbe avec l'ouverture et la fermeture de l'élément de toit,
**caractérisé par**
une structure de connection pour le tuyau de drainage comprenant un panneau d'insert (75) qui est à l'intérieur de la portion de ladite bande d'étanchéité (73), où ledit tuyau de drainage (8) est connecté, pour renforcer ladite bande d'étanchéité (73), et un connecteur de tuyau (81) qui est fixé audit panneau d'insert (75) et est relié à l'extrémité amont dudit tuyau de drainage (8).

2. Véhicule selon la revendication 1, dans lequel une vis femelle ou une vis mâle (753) est prévue sur ledit panneau d'insert (75), et ledit connecteur de tuyau (81) est fixé audit panneau d'insert (75) par une connection par vis.

3. Véhicule selon la revendication 1, dans lequel un récipient (757) est formé sur ledit panneau d'insert (75B) pour venir en prise avec ledit connecteur de tuyau (81B), et ledit connecteur de tuyau est fixé en étant engagé dans ledit récipient dudit panneau d'insert.

4. Véhicule comprenant un élément de toit mobile (23) qui peut ouvrir et fermer un habitacle du véhicule, et une bande d'étanchéité (73) le long du bord dudit élément de toit (23) qui s'étend dans la direction du bord et qui possède un canal de drainage (738), et un tuyau de drainage (8) qui relie ladite bande d'étanchéité (73) à un drain latéral du véhicule qui est prévu sur le côté du véhicule, où le tuyau de drainage se courbe avec l'ouverture et la fermeture des éléments de toit,
**caractérisé par**
une structure de connection pour tuyau de drainage comprenant un panneau d'insert (75C) qui se situe à l'intérieur de la portion de ladite bande d'étanchéité (73) où ledit tuyau de drainage (8) est connecté, pour renforcer ladite bande d'étanchéité, et un connecteur de tuyau (81C) qui est formé en une pièce avec ledit panneau d'insert (75C) et qui est relié à l'extrémité amont dudit tuyau de drainage (8).
